# FASCICULE DE BREVET EUROPEEN

(11) **EP 0 949 168 B1**
(45) Date de publication et mention de la délivrance du brevet: **19.03.2003**
(21) Numéro de dépôt: 98400848.2
(22) Date de dépôt: 08.04.1998
(51) Int. Cl.: B65G 51/02, B65G 1/04, B65G 47/88

(54) **Installation de convoyage pneumatique par tube pour la distribution automatique de petits paquets dans les grandes surfaces commerciales**
Pneumatische Rohrförderanlage zum Verteilen kleiner Packungen in grossen Warenhäusern
Pneumatic tube conveyor system of little packs in big stores

(43) Date de publication de la demande: 13.10.1999
(73) Titulaire: GM Vending, S.A., 31110 Noain (Navarra) (ES)
(72) Inventeur: Lacasta, Pedro José, 31011 Pamplona (Navarra) (ES)
(74) Mandataire: Thévenet, Jean-Bruno

(56) Documents cités:
- EP-A- 0 547 020
- EP-A- 0 599 164
- EP-A- 0 670 132
- EP-A- 0 700 025
- EP-A- 0 786 748
- GB-A- 2 253 619
- SE-A- 8 100 754
- US-A- 3 885 757
- US-A- 4 184 792
- US-A- 5 215 213

## Description

Les installations des grandes surfaces commerciales, comme les supermarchés et autres commerces de même type tendent à simplifier au maximum le service autonome en mettant à la disposition des consommateurs des systèmes automatiques facilitant l'obtention des produits.

Il existe déjà des installations prévues pour délivrer des petits paquets de produits depuis des magasins de stockage, par sélection effectuée par l'utilisateur sur des panneaux situés à des points clés, par exemple pour délivrer des paquets de cigarettes.

Les installations connues de ce type présentent cependant un défaut de lenteur de fonctionnement due à la nature même de leur construction qui limite leurs possibilités en générant de surcroît un problème d'attente en cas de demande importante.

Le brevet européen EP 599.164 de OLSEN se réfère à cet égard à une installation pour délivrer de petits paquets, comme des paquets de cigarettes, à partir de plusieurs compartiments de stockage à proximité des caisses des établissements, ce qui pose d'une part un problème important d'occupation de l'espace dans les zones d'emplacement des caisses et d'autre part un problème de capacité.

Le brevet US 5.215.213 de NESTLER décrit un appareil de distribution de petits paquets, type paquets de cigarettes, depuis un magasin général jusqu'au zones des caisses, à travers des conduits d'envoi, qui repose sur des solutions mécaniques rendant son fonctionnement très lent et très complexe.

Le brevet suédois SE 429604 adopte une solution apparentée à celle de NESTLER. Par ailleurs, les brevets européens EP670.132 et EP 786.748 font référence à une solution qui prévoit des magasins intermédiaires dans les conduits amenant aux sorties de distribution des paquets pour délivrer immédiatement depuis ces magasins intermédiaires les paquets de grande consommation.

Le brevet européen EP 700.025 de HORSTED adopte une solution similaire à celle de NESTLER mais avec des systèmes pneumatiques pour le transfert des paquets jusqu'aux sorties de distribution.

En dépit des avantages que présente cette solution pneumatique face aux systèmes mécaniques, les réalisations proposées dans le brevet mentionné EP 700.025 et dans les brevets EP 670.132 et 786.748 souffrent tous du même problème de lenteur de la distribution des paquets, dans la mesure où la sortie des paquets entre le magasin général et la conduite de distribution nécessite l'ouverture d'une trappe, l'introduction des paquets dans un logement d'attente, la fermeture de la trappe et l'activation des dispositifs d'impulsion pneumatique qui ne peuvent être actionnés avant pour que le chargement des paquets n'interfère pas avec l'emplacement de stockage. Toutes ces opérations donnent un processus assez lent.

Bien que le brevet européen EP786.748 décrive une solution permettant de dévier le flux d'air sans arrêter les moyens de propulsion pneumatique pendant le chargement des paquets, cette solution fournit une vitesse satisfaisante pour le premier envoi mais non pour les suivants, car une fois les paquets du premier envoi ont été chargés et dirigés vers leur destination, le flux d'air ne peut pas être interrompu tant que les paquets ne sont pas arrivés à cette destination. Par conséquent, le flux d'air ne peut pas être dévié et le système ne peut pas procéder au chargement des paquets d'un nouvel envoi.

Ce problème de lenteur commun à tous les brevets européens mentionnés 670.132, 700.025 et 786.748 apparaît fondamentalement dans la mise en oeuvre de ces brevets qui ne permet pas d'obtenir de résultats satisfaisants. En effet, ce type d'installation est conçu pour être placé à proximité des terminaux de points de vente des supermarchés, grandes surfaces ou commerces similaires de manière à ce que l'utilisateur demande et reçoive le ou le paquet(s) de cigarettes lorsqu'il passe à la caisse. L'opération d'envoi des paquets doit de ce fait être effectuée très rapidement dans la mesure où le client ne peut pas quitter la caisse avant d'avoir reçu le paquet demandé qui arriverait au client suivant en affectant tout le système.

On voit ainsi que la rapidité et la fiabilité de la distribution sont les caractéristiques fondamentales qu'une installation doit présenter pour être réellement opérationnelle. La solution que nous proposons ici intègre ces deux conditions.

La présente invention propose maintenant une nouvelle installation de distribution automatique de petits paquets de produits, tels que des paquets de chewing-gums, friandises, petite épicerie etc., de préférence des paquets de cigarettes, installation dont une description est donnée dans ce qui suit, sans que le mode de réalisation décrit présente le moindre caractère limitatif.

Cette installation réalise le transfert des paquets de cigarettes depuis le magasin général jusqu'à la conduite d'envoi selon un procédé beaucoup plus rapide que celui utilisé dans les installations mentionnées connues, basé sur une impulsion pneumatique qui fonctionne dès la demande des paquets.

Dans la zone de sortie du magasin de stockage des paquets, le système de distribution comprend un double conduit parallèle, dont l'une des parties est prévue pour recevoir du magasin les paquets à délivrer et l'autre partie est directement reliée à la distribution pneumatique à impulsion, des trappes à bascule étant placées entre les deux parties pour pouvoir changer la communication interne entre l'une et l'autre partie.

La poussée pneumatique peut de cette façon être activée au moment de la sélection des paquets dans l'une des parties du double conduit pendant que le paquet ou les paquets demandés en attente dans le magasin sont délivrés à l'autre partie du double conduit mentionné, la poussée pneumatique étant ensuite déviée, par changement de position des trappes, vers la partie du conduit dans laquelle les paquets ont été disposés au préalable pour l'envoi, ces paquets étant alors transférés par impulsion pneumatique jusqu'au point de distribution.

On obtient de cette manière une réponse extrêmement rapide pour l'envoi des paquets demandés lors des différentes sélections avec une rapidité bien plus grande que dans les installations conventionnelles dans lesquelles la mise à disposition des paquets à partir du magasin et l'impulsion servant ensuite à envoyer ces paquets nécessite l'ouverture d'une trappe, le placement des paquets à un emplacement d'attente avant leur envoi ultérieur, la fermeture de la trappe et l'activation du système de poussée pneumatique, ce qui suppose un processus extrêmement lent.

En ce qui concerne la solution proposée dans le brevet européen EP 786.748 dans lequel les moyens pneumatiques peuvent être en fonction et l'air dévié pendant le chargement des paquets, le premier envoi aura une réponse aussi rapide que la présente invention mais pour les envois suivants celle-ci présente un avantage sensible en terme de vitesse.

En effet pour le deuxième envoi et pour les envois suivants, la solution du brevet européen EP 786.748 ne permet pas de dévier le flux d'air avant que l'envoi précédent n'ait atteint complètement sa destination. Ce n'est qu'à ce moment là que le flux d'air est dévié et que l'appareil recharge un nouvel envoi, de sorte qu'une fois le nouvel envoi chargé, le flux d'air revient à sa disposition initiale et le nouvel envoi peut avoir lieu. Face à cette solution, la présente invention permet le chargement d'un second envoi dans le deuxième conduit pendant qu'un envoi est envoyé jusqu'au point de distribution. Lorsque le premier envoi a atteint son point de distribution, il suffit de diriger le flux d'air fournissant l'impulsion vers le deuxième conduit pour que le nouvel envoi soit dirigé vers sa destination ce qui augmente singulièrement la vitesse de réponse du système.

D'autre part, dans notre invention, le passage vers les déviations de sortie distinctes est sélectionné par l'intermédiaire de trappes positionnées automatiquement en fonction des points de demande, plusieurs magasins autonomes constitués par les compartiments d'un carrousel destinés à accueillir des paquets les plus demandés étant prévu en relation avec les différentes sorties, de sorte que lorsque les paquets demandés existent dans ces magasins situés près des sorties, la distribution a lieu à partir de ces magasins ce qui améliore la rapidité alors que dans le cas contraire la distribution se fait à partir du magasin général.

Des systèmes de lecture optique situés stratégiquement dans le conduit de distribution des paquets et dans les déviations débouchant sur les sorties contrôlent le passage des paquets pour détecter toute anomalie en cas de blocage ou de déchirement du paquet à l'intérieur du conduit.

L'un des compartiments du magasin général contient des paquets vides dont les dimensions correspondent à celles de l'intérieur du conduit de distribution reliant les points de sélection de sorte qu'en cas de blocage ou de présence de restes provenant du déchirement d'un paquet à l'intérieur du conduit, il soit possible de demander la distribution de l'un des paquets vides mentionnés, ce dernier entraînant dans son transfert les restes situés à l'intérieur du conduit en le nettoyant de façon rapide et efficace. Il est prévu que l'envoi de ces paquets vides soit automatique.

En fin d'installation se trouve un conteneur nommé "caisse noire" dans lequel débouche le conduit de distribution des paquets de manière à ce qu'un paquet envoyé par erreur ne soit accepté par aucune des sorties et arrive en fin de course dans cette "caisse noire".

Avant et après l'entrée en zone d'attente des paquets, en vue de leur envoi ultérieur, des détecteurs sont prévus pour contrôler le passage des paquets dans cette zone et empêcher que les trappes de déviation de la poussée pneumatique ne basculent avant que tous les paquets demandés n'aient été introduits dans cette zone, évitant ainsi qu'un paquet reste coincé dans les trappes mentionnées.

La chaîne de transfert des paquets jusqu'à la zone d'attente avant envoi effectue automatiquement un "balayage" en retirant du conduit de distribution tout paquet qui se trouverait par erreur dans cette zone pour l'envoyer dans la "caisse noire".

Tant dans le magasin général que dans les magasins autonomes des sorties sont prévus des détecteurs de présence de paquets dans les compartiments correspondants pour produire un signal d'avertissement avant qu'un espace du magasin général ne soit libre ; de même, une demande automatique de paquets correspondants a lieu pour recharger ces paquets à partir du magasin général en cas d'espace libre dans les magasins autonomes de sortie.

Les magasins autonomes des sorties disposent à cet effet de détecteurs à deux niveaux qui contrôlent la présence des paquets dans les compartiments, et qui possèdent de plus un détecteur supérieur contrôlant le passage des paquets provenant du magasin général dans le conduit de distribution de façon à ce que lorsqu'un paquet reste coincé à l'entrée du passage dans le magasin autonome correspondant, un mouvement tournant de va-et-vient libère le paquet coincé.

La figure 1 représente une vue d'ensemble de l'installation préconisée.

La figure 2 est une représentation agrandie du plan de la zone d'attente et d'envoi par impulsion des paquets à la sortie du magasin général.

La figure 3 représente un détail de la synchronisation entre les trappes d'entrée et de sortie de la zone mentionnée d'attente et d'envoi par impulsion des paquets.

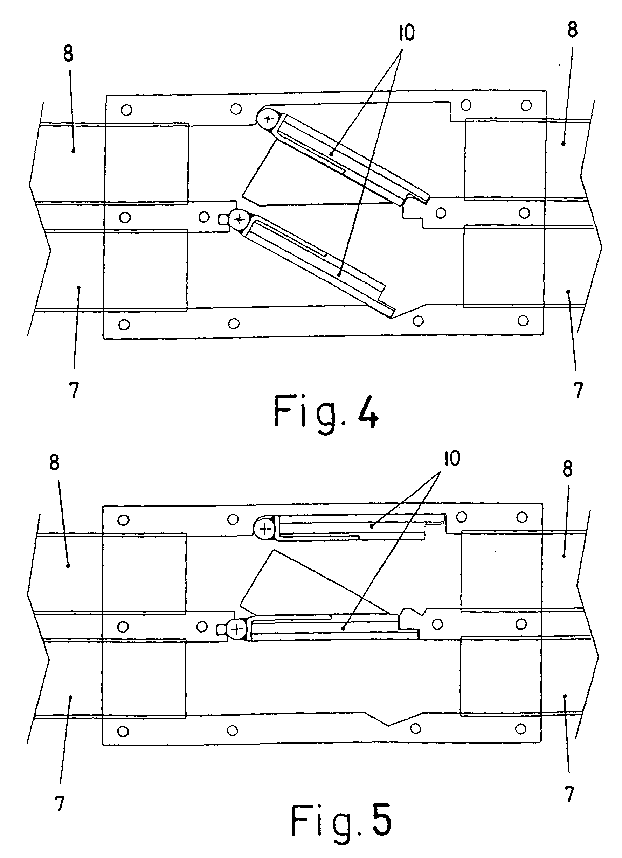

Les figures 4 et 5 représentent un détail agrandi de la partie d'entrée dans la dite zone d'attente et d'envoi par impulsion des paquets avec les trappes de déviation de la poussée pneumatique situées respectivement dans leurs deux positions de fonctionnement.

La figure 6 est un agrandissement de la partie correspondant à la sortie de cette zone d'attente et d'envoi des paquets.

La figure 7 est un agrandissement de la zone d'entrée dans l'une des déviations de sortie du conduit de distribution des paquets.

La figure 8 est un agrandissement d'une sortie de distribution des paquets muni d'un magasin autonome à proximité de la sortie.

La figure 9 est un agrandissement d'une section d'un magasin autonome pouvant être incorporé sur les sorties.

La figure 10 est un agrandissement du mécanisme de retenue des paquets à l'intérieur des magasins autonomes.

La figure 11 est un schéma de la configuration de la carte électronique de commande de chaque terminal de l'installation.

La figure 12 est un schéma de la commande informatique de l'ensemble de l'installation.

La figure 13 est un schéma de la configuration du panneau disponible à chaque point de sélection permettant d'effectuer une demande de distribution des paquets contenus dans l'installation.

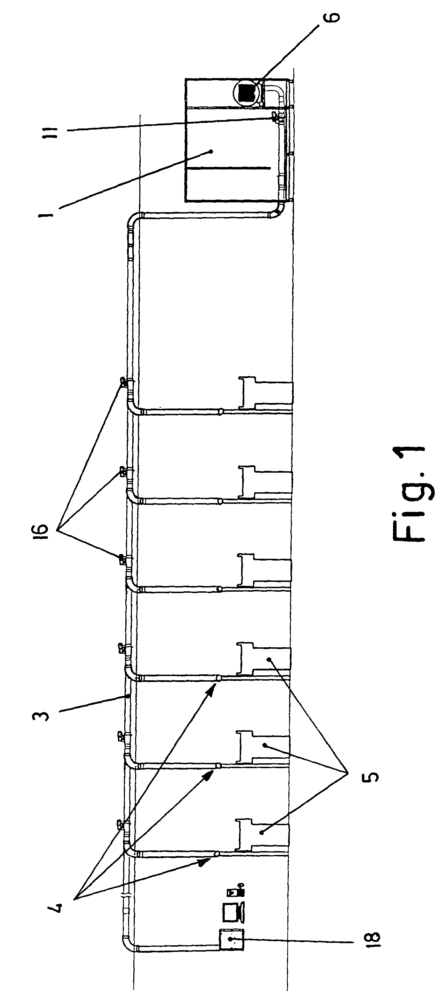

L'objet de la présente invention est une installation destinée à la distribution automatique de paquets de cigarettes ou de paquets similaires contenant des produits de consommation courante dans les grandes surfaces commerciales, cette installation se composant fondamentalement, comme le montre la figure 1, d'un magasin général (1) muni de compartiments accueillant les différents types de paquets (2) de l'application et d'un conduit (3) de transfert qui part de ce magasin général (1) et débouche sur une série de sorties (4) vers des points concrets, par exemple à proximité des caisses (5) de l'établissement, dénommés terminaux de point de vente.

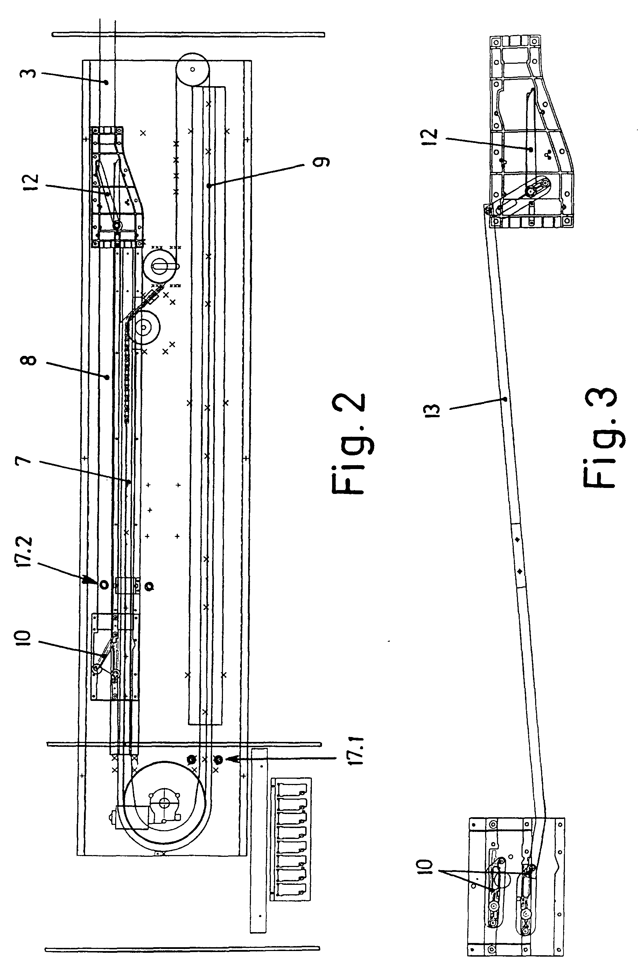

L'envoi des paquets (2) par le conduit (3) se fait par impulsion pneumatique générée par un système pneumatique (6), la zone initiale du conduit mentionné (3) étant constituée par un double conduit parallèle (7-8) similaire à celui de la figure 2, de sorte que l'une des parties (7) soit en mesure de recevoir du magasin (1) les paquets (2) à distribuer, ces paquets étant introduits dans cette partie (7) par une chaîne de transport (9), l'autre partie (8) restant en relation directe avec le système pneumatique (6).

Des trappes à bascule (10) visibles sur les figures 2 et 3 sont incorporées intérieurement entre les deux parties mentionnées (7) et (8) et sont susceptibles de changer de position entre une position qui laisse les conduits de ces parties (7) et (8) indépendants et une position où elles établissent une déviation de communication entre les deux conduits mentionnés (7) et (8), le changement pouvant être effectué sous l'action d'un moteur d'actionnement signalé par la référence (11), figure 1.

A la sortie de ce double conduit (7-8), une trappe (12) permet d'isoler le conduit (7) par rapport au conduit (3) mais laisse ouvert le conduit (8) jusqu'au conduit (3) ou permet d'obtenir la situation contraire par changement de position, c'est-à-dire de laisser dans ce cas le conduit (7) ouvert par rapport au conduit (3) et le conduit (8) fermé par rapport au conduit (3), comme montré sur les figures 2, 3 et 6.

Cette trappe (12) située sur la sortie est reliée aux trappes (10) de la partie d'entrée dans le double conduit (7-8) par une biellette (13) représentée à la figure 3, de sorte que, lorsque sous l'action du moteur (11) les trappes (10) laissent en communication le conduit (7) avec le système pneumatique (6), la trappe (12) est positionnée pour laisser ouvert le conduit mentionné (7) vers le conduit (3) et, dans le cas contraire, lorsque les trappes (10) sont positionnées pour établir la déviation de l'entrée vers le conduit (8) à la sortie, la trappe (12) est positionnée pour laisser ouvert le conduit mentionné (8) vers le conduit (3).

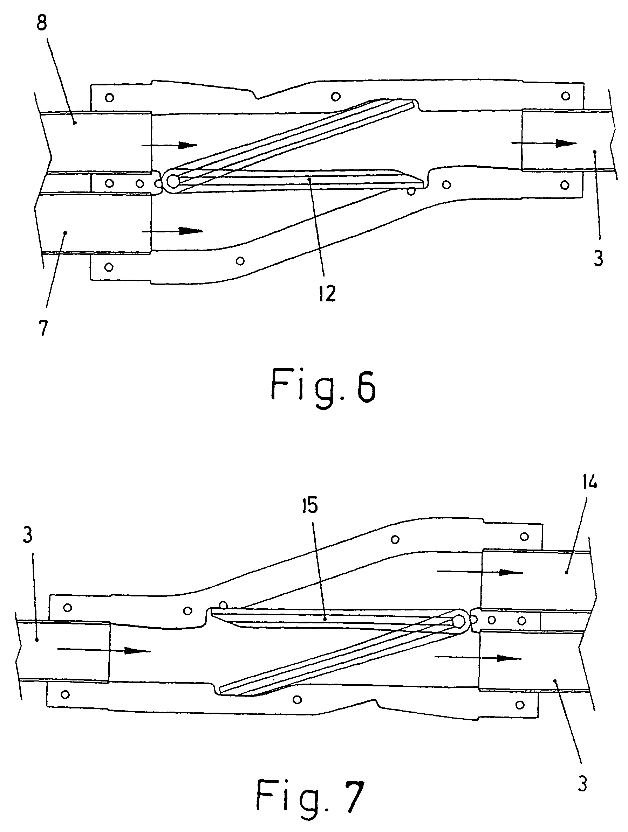

La communication entre le conduit (3) et les sorties (4) est établie quant à elle par des déviations respectives (14) représentées à la figure 7. A l'entrée de chacune des déviations (14) se trouve une trappe correspondante (15) qui assure la fermeture et l'ouverture du passage vers la déviation (14) correspondante. Ces trappes (15) sont mues par des moteurs d'actionnement respectifs signalés par la référence (16), figure 1.

Avec ce système, lorsqu'une demande d'un ou plusieurs paquets (2) a lieu depuis l'une des sorties (4), la trappe (15) de sélection d'entrée dans la déviation (14) correspondante se place automatiquement pour interrompre le passage par le conduit (3) en laissant l'entrée de la déviation ouverte (14).

En même temps, la sélection du paquet ou des paquets (2) demandés a lieu dans le magasin (1). Le ou les paquet(s) tombe(nt) sur la chaîne transporteuse (9) et sont introduits par cette chaîne dans le conduit (7) où ils sont placés pour envoi.

Pendant cette opération, les trappes (10) restent positionnées en laissant indépendants les conduits (7) et (8), tant que la trappe (12) maintient fermée la sortie du conduit (7) et ouverte la sortie du conduit (8) vers le conduit (3).

Ce système permet de mettre en action le système pneumatique (6) au moment de la demande et de propulser de l'air comprimé par le conduit (8) jusqu'au conduit (3) sans interférer avec l'introduction des paquets (2) sélectionnés dans le conduit (7) qui est dans ces conditions totalement isolé de la poussée pneumatique.

Une fois que les paquets (2) destinés à l'envoi sont placés dans le conduit (7), les trappes (10) changent de position en changeant à son tour la position de la trappe (12) qui dévie la poussée pneumatique vers le conduit (7) de manière à ce que les paquets (2) placés dans ce conduit (7) soient transférés par poussée pneumatique vers le conduit (3) et arrivent par ce conduit à la dérivation (14) correspondant à la sortie (4) où la demande a été effectuée pour déboucher par cette dérivation (14) sur la sortie correspondante.

La figure 2 montre la disposition de deux paires de détecteurs optiques signalées par les références (17.1 et 17.2) en relation avec la course de la chaîne transporteuse (9). Les détecteurs (17.1) sont disposés avant l'entrée du conduit (7) et les détecteurs (17.2) juste après les trappes (10), de sorte que l'orsqu'un paquet (2) détecté par les détecteurs (17.1) n'est pas détecté également par les détecteurs (17.2), les trappes (10) ne sont pas activées pour éviter que, lors du changement de position, les trappes (10) ne puissent attraper un paquet (2) juste au moment où il passe devant elles, emporté par la chaîne transporteuse (9) vers le conduit (7).

A la sortie vers le conduit (3) et aux entrées des dérivations (14), d'autres détecteurs optiques sont prévus pour contrôler le passage des paquets (2) envoyés et permettent de détecter toute anomalie pouvant se produire pendant les envois, comme des blocages ou le déchirement de paquets, et empêchant de réaliser correctement la distribution des paquets (2) demandés.

Ces détecteurs de contrôle de la distribution des paquets (2) sont situés de préférence dans les zones courbes où les paquets (2) en transfert sont obligés d'avoir leurs bords séparés, bien qu'ils se suivent, chacun d'entre eux pouvant être parfaitement détecté sans risquer que deux paquets ou plus qui se suivent soient interprétés comme un seul.

Il est prévu de plus dans le magasin (1), un compartiment de chargement réservé à des paquets (2) vides aux dimensions adaptées à l'intérieur du conduit (3) de façon à ce qu'en cas de blocage ou de déchirement d'un paquet (2) pendant l'envoi, la distribution d'un de ces paquets (2) vides puisse être sélectionnée, ce paquet prenant une grande vitesse en raison de son faible poids et de ses dimensions adaptées à l'intérieur du conduit (3), et entraînant les restes qui pourraient exister à l'intérieur du conduit d'envoi. Il est prévu que l'envoi de ces paquets vides (2) se fasse automatiquement.

La figure 1 montre à l'extrémité de l'installation un conteneur (18) nommé "caisse noire" dans lequel débouche le conduit (3) de façon à ce que tout paquet (2) envoyé par erreur s'arrête dans cette "caisse noire", le contrôle effectué par les détecteurs de passage lui refusant l'accès d'une quelconque dérivation (14) vers les sorties (4).

Il est prévu que la chaîne transporteuse (9) effectue automatiquement, de temps en temps, un "balayage" du conduit (7) de manière à ce que tout paquet (2) qui se trouverait par erreur dans ce conduit soit envoyé par impulsion jusqu'au conduit (3) où sa présence est détectée par les détecteurs de passage, le système pneumatique (6) entrant en action pour envoyer ce paquet (2) dans la "caisse noire" (18).

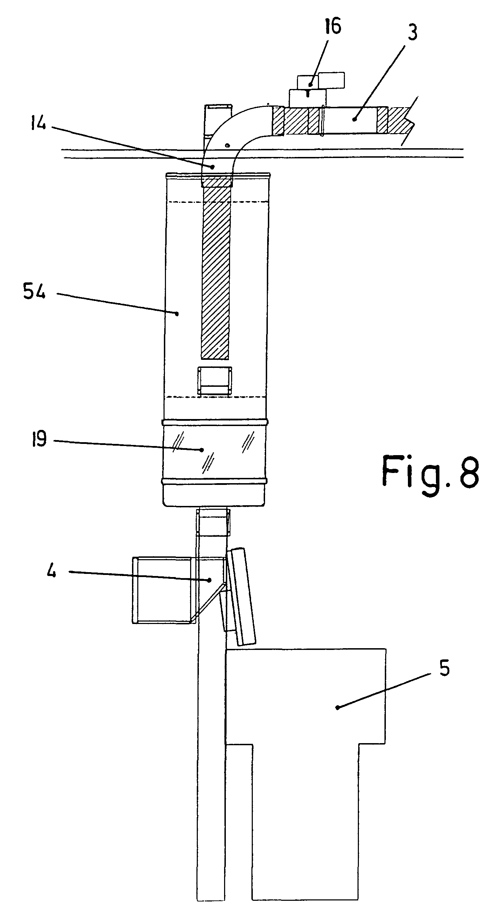

Comme variante possible de réalisation pratique, il a été prévu qu'en relation avec chacune des sorties (4), un magasin autonome (19) soit disposé conformément à la figure 8. On dispose dans chaque magasin autonome (19) un nombre déterminé de paquets (2) les plus fréquemment demandés, de sorte que lorsqu'une demande est effectuée par la sortie (4) correspondante, la distribution se fait depuis ce magasin autonome (19) si les paquets (2) demandés existent dans le magasin autonome (19). Le service est ainsi plus rapide. Par contre, lorsque les paquets (2) demandés ne se trouvent pas dans le magasin autonome (19), la distribution se fait à partir du magasin général (1).

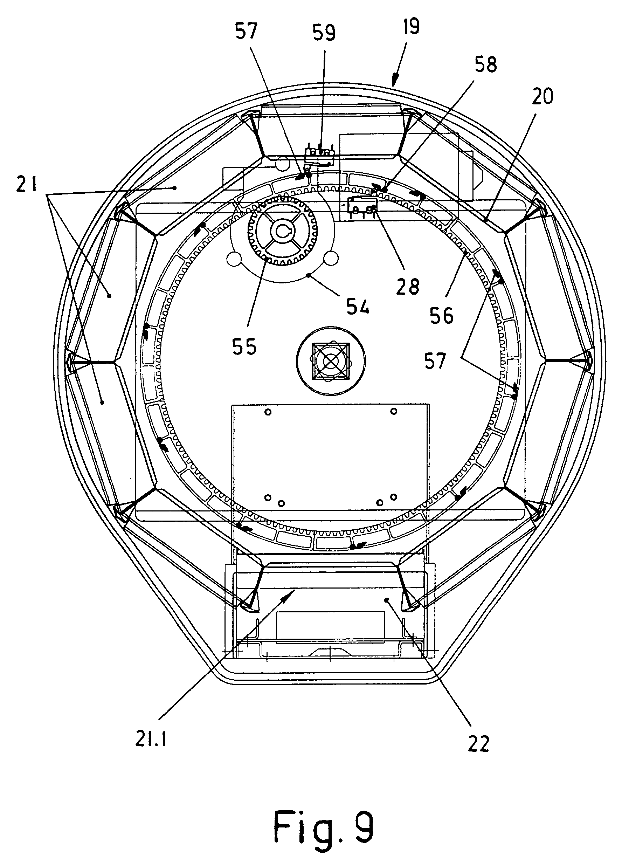

Chaque magasin autonome (19) est composé d'un carrousel (20) mis en relation avec un conduit de chute libre (22) qui communique avec la sortie correspondante (4). Le carrousel (20) comporte une série de compartiments (21) pour accueillir les paquets (2) comme le montre la figure 9, un de ces compartiments restant vide, comme le montre la référence (21.1) de la figure 9, pour permettre le passage des paquets (2) provenant du magasin général (1) jusqu'à la sortie (4) en empruntant le conduit de chute libre (22).

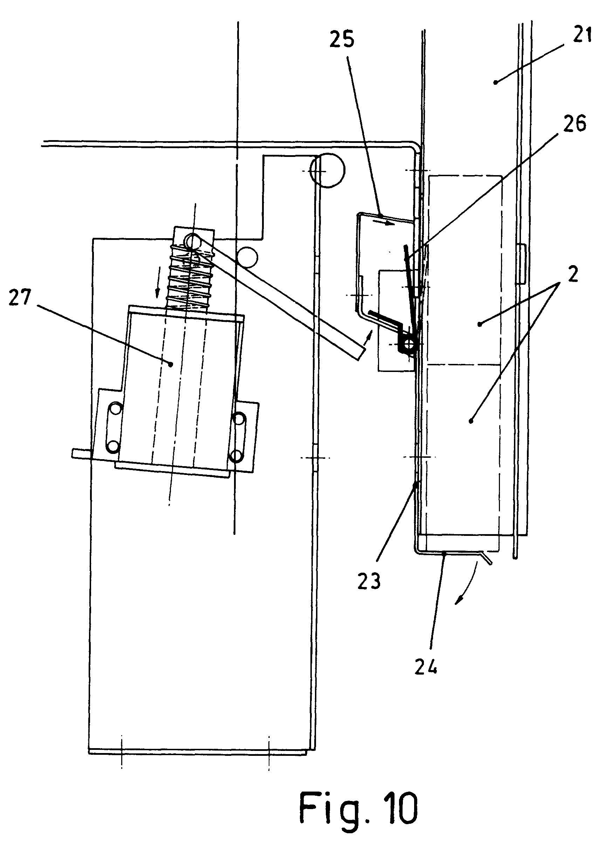

Un balancier (23), représenté à la Figure 10, est en relation avec les compartiments (21). Chaque balancier (23) comporte dans sa partie inférieure une base (24) de support des paquets (2) tandis que la partie supérieure présente une patte (25) susceptible de s'introduire à l'intérieur du compartiment (21), latéralement par rapport à la position qui correspond au second paquet (2) dans l'empilement situé derrière le compartiment (21).

Ce balancier (23) dispose d'un ressort (26) qui tend à le maintenir en position de soutien par sa base (24) de l'empilement des paquets (2) dans le compartiment (21). Il est d'autre part relié à un solénoïde d'actionnement (27) dont l'action provoque le basculement du balancier (23) afin de libérer le maintien des paquets (2). Ce basculement du balancier (23) fait que la patte supérieure (25) pénètre dans le compartiment (21) en faisant pression sur le second paquet (2) de l'empilement, ce dernier restant par conséquent maintenu en position.

De cette façon, lorsque suite à une demande une distribution de paquet (2) depuis le magasin autonome (19) respectif, le carrousel (20) de ce magasin autonome (19) tourne jusqu'à ce que le compartiment (21) correspondant soit situé dans le conduit de chute libre (22), le solénoïde (27) est ensuite commandé pour faire basculer le balancier (23) et laisser tomber le paquet inférieur (2) de l'empilement du compartiment (21) mais sans laisser tomber le second paquet (2) qui est retenu par la patte (25).

La Figure 9 montre comment le carrousel (20), pour être entraîné en rotation, comporte une couronne (56) qui engrène avec un pignon (55) mû par un moteur (54) qui occupe une position non centrale pour garantir ainsi la disposition correcte du carrousel (20) lors de ces rotations, en évitant l'accumulation d'erreurs. On aperçoit également sur la Figure 9 la présence de micro-interrupteurs (28 et 59). Le micro-interrupteur (28) est en relation avec un seul ergot (58), ce qui permet de déterminer la position du passage libre c'est-à-dire lorsque le compartiment vide (12.1) est sur le conduit de chute libre (22).

Le micro-interrupteur (59) est en relation avec une série d'ergots (57) disposés autour de la couronne (56) de manière à pouvoir déterminer les différentes positions des compartiments (21).

Le magasin général (1), tout comme les magasins autonomes (19), sont munis de détecteurs de chargement, de sorte que lorsque le chargement de l'un des compartiments du magasin général (1) devient inférieur à un niveau de chargement déterminé, des moyens d'avertissement sont activés automatiquement pour procéder au rechargement. De même, lorsque dans un magasin autonome (19) le chargement de l'un des compartiments (21) devient inférieur à un niveau de chargement déterminé, une demande de rechargement depuis le magasin général (1) est émise automatiquement. La demande de rechargement respecte les demandes effectuées entre-temps par les utilisateurs, lesquelles sont traitées en priorité.

A cet effet, les magasins autonomes (19) sont munis de détecteurs de chargement qui contrôlent la présence des paquets (2) dans chaque compartiment (21).

Selon une solution préférée, il est prévu en relation avec chaque compartiment (21) un détecteur qui permet de compter les paquets de ce compartiment (21). Ce détecteur unique permet de compter le nombre de paquets existant dans chaque compartiment (21) au moyen de programme informatique qui contrôle le système et en fonction des temps de passage entre ses activations.

De plus, en relation avec la trappe (15) de chaque déviation (14) vers un magasin autonome (19), il est prévu de disposer un autre détecteur qui empêche la fermeture de la trappe (15) tant que tous les paquets qui doivent être dirigés vers cette déviation (14) ne sont pas passés, évitant ainsi le blocage indésirable d'un paquet.

La partie supérieure de chaque magasin autonome (19) correspondant à l'entrée dans le passage (22) comporte un autre détecteur qui contrôle le passage des paquets (2) provenant du magasin général (1) de sorte que lorsque l'un de ces paquets (2) reste bloqué dans l'entrée mentionnée, le moteur (54) est actionné automatiquement en conférant un mouvement rotatif de va-et-vient au carrousel (20) correspondant qui élimine le blocage, le mouvement rotatif de va-et-vient amenant le paquet (2) bloqué pour qu'il tombe dans le passage (22).

L'ensemble fonctionnel de l'installation est en relation avec un système informatique de commande au moyen duquel tout le processus est contrôlé suivant un déroulement totalement automatique conformément à un programme préétabli, de sorte que, selon un mode particulier de programmation, il est établi :
- L'ordre de chute des paquets (2) dans les compartiments du magasin général (1) pour que la chute d'un paquet (2) ne se produise pas au-dessus d'un autre en prenant en compte le sens d'avance de la chaîne transporteuse (9) et la distribution des compartiments mentionnés dans le magasin général (1).
- L'ordre de distribution vers les sorties (4), pour une distribution par ordre selon la situation de ces sorties (4), les commandes simultanées envoyées depuis les points distincts étant réorganisées pour que la distribution ait lieu d'abord au point de sortie (4) le plus proche et aux points de sortie suivants en fonction de leur distance par rapport au magasin général (1), pour que la distribution des paquets (2) envoyés s'arrête dans chaque cas à la déviation (14) qui lui correspond sans rencontrer d'autre déviation (14) ouverte pendant sa course.
- La réorganisation des paquets (2) par taille de façon à ce que, pendant les envois de distribution, soient envoyés d'abord des paquets de tailles plus petites, pour que les paquets de plus grandes tailles, envoyés ensuite, ferment le conduit et poussent les paquets plus petits envoyés précédemment.
- La sélection du poids des envois de façon à ce qu'il ne puisse y avoir d'envoi d'un ensemble de paquets (2) don le poids dépasse la capacité d'impulsion du système pneumatique (6).

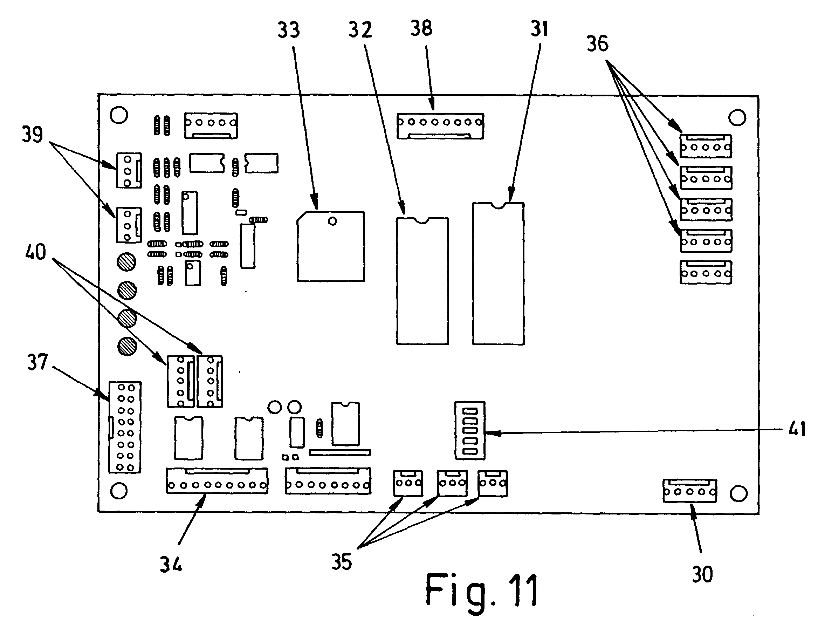

A chaque point de sortie (4), il existe un panneau (29) de commande qui comprend une carte de fonctionnement (30), conforme à la figure 11, comportant les éléments suivants :
- une mémoire EPROM (31) qui stocke les données du programme préétabli.
- une mémoire RAM (32) servant de base de données qui conserve les informations. En relation avec cette mémoire RAM (32), on trouve une pile auxiliaire au lithium pour conserver les informations en cas de coupure de courant.
- un microprocesseur (33) qui traite les données pour les transmettre à l'ordinateur général (42).
- un connecteur (34) pour les boutons de commande.
- trois jeux de détecteurs optiques (35) pour les détecteurs du magasin autonome (19) correspondant.
- une série de connecteurs (36) pour les moteurs des trappes de passage dans le conduit de distribution des paquets (2).
- un connecteur (37) pour un écran à cristaux liquide.
- un connecteur de réseau MDB (38).
- deux ports série RS-232 (39).
- des connecteurs (40) pour un port de communication RS-485.
- un bloc de micro-interrupteurs (41) pour déterminer un code d'identification particulier de chaque panneau (29).

Le magasin général (1) comprend pour sa part un équipement de contrôle formé par trois cartes semblable à la carte (30) du panneau (32) de chacune des sorties, l'une des cartes du magasin général (1) étant une carte redondante pour remplacer au besoin l'une des deux autres défectueuse, l'autre carte servant d'interface entre l'équipement et le PC de commande générale, la troisième carte étant celle qui commande l'ensemble du magasin (1) avec une capacité de commande pouvant atteindre 16 moteurs correspondant chacun à 16 conduits de paquets respectifs (2).

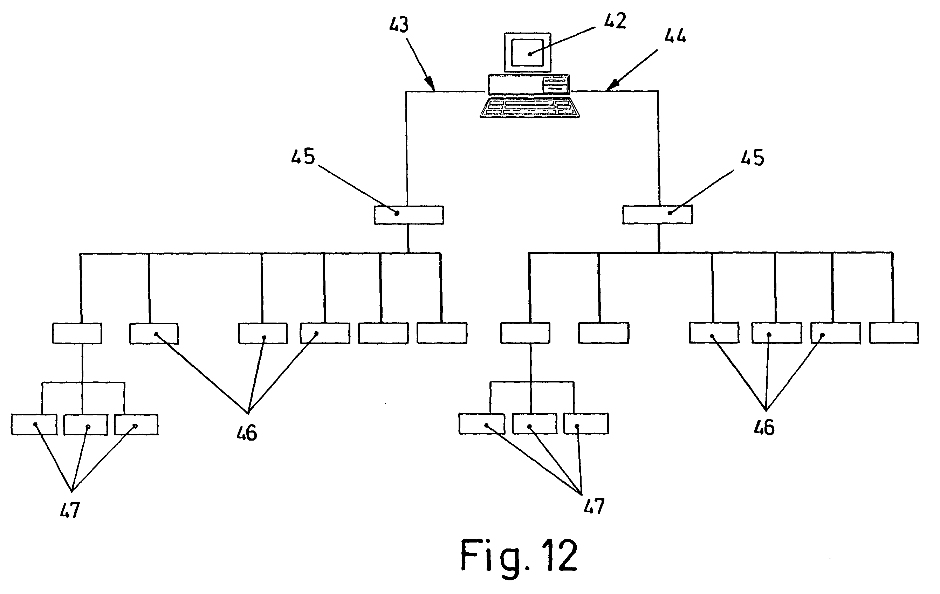

Comme le montre la figure 12, l'ensemble de contrôle de l'installation comprend une unité centrale (42) qui commande tous les procédés fonctionnels, cette unité (42) possédant deux sorties (43) et (44) qui peuvent se connecter à des groupes d'installations respectifs comprenant chacun un panneau interface (45) sur lequel peuvent être connectés différents panneaux terminaux (46) permettant de contrôler différents moteurs et trappes (47).

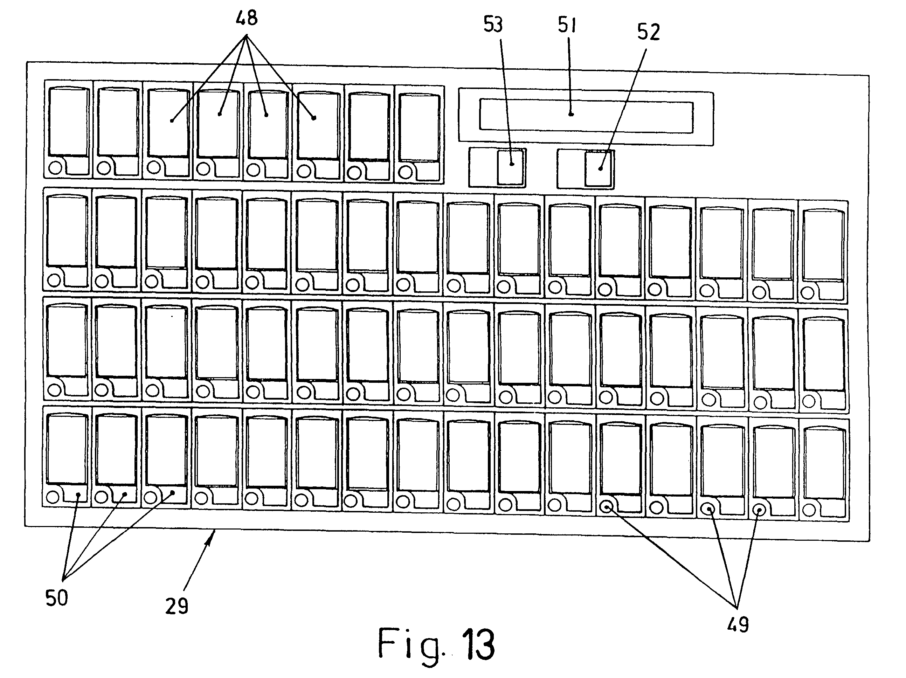

La Figure 13 montre un exemple de panneau de sélection (29) comprenant une série de petites plaques (48) destinées à identifier les différents types de paquets (2) que l'installation peut distribuer. Chaque plaque (48) est associée à un bouton de sélection (49) et à un petit affichage (50) numérique reprenant la sélection effectuée. Ce panneau (29) comprend de plus un affichage général (51) qui reprend la commande effectuée à chaque manipulation avec mention du prix individuel de chacune des sélections et le prix total de l'ensemble. A côté de cet affichage général (51) est prévu un bouton (52) permettant d'accepter la commande sélectionnée ainsi qu'un bouton d'annulation (53), l'annulation intervenant d'elle-même, après un laps de temps déterminé, à défaut d'acceptation de la commande par le bouton (52).

L'installation peut être utilisée efficacement avec tout type de paquets (2) de cigarettes, des boîtes en plastique ou en carton étant également prévues pour le logement de produits conditionnés dans leur propre sachet afin d'être chargés dans l'installation, de sorte que celle-ci peut être utilisée avec des produits placés dans des sachets ou emballages similaires, sans forme géométrique définie, comme des paquets de tabac ou des produits comestibles. Une fois ces produits distribués, l'opérateur ou opératrice de la caisse (5) retire cette boîte pour qu'elle soit réutilisée avec d'autres paquets (2) tels que de type sachets ou similaires.

Les magasins autonomes (19) des sorties (4) peuvent être munis d'une structure cylindrique (54) pour le support de publicité, laquelle peut être dotée d'un éclairage et animée d'un mouvement tournant,

## Revendications

1. Installation pour la distribution automatique de petits paquets dans les grandes surfaces commerciales, du type formée par un magasin général (1) d'où part un conduit (3) disposant de dérivations (14) vers des sorties respectives (4) qui débouchent sur des points concrets d'accès pour des utilisateurs, **caractérisée en ce que**, dans la zone de sortie provenant du magasin général (1), le conduit (3) comprend un double conduit parallèle (7-8) dont les deux parties incorporent des trappes (10) dont la position peut être modifiée pour séparer les conduits correspondant aux deux parties (7) et (8) ou placer en position de déviation le conduit (8) de la deuxième partie vers le conduit (7) de la première, l'une des parties (7) restant prête à recevoir du magasin (1) les paquets (2) à distribuer tandis que l'autre partie (8) reste directement en relation avec un système pneumatique (6) créant une impulsion pneumatique pour l'envoi de paquets (2) par le conduit (3).

2. Installation pour la distribution automatique de petits paquets dans les grandes surfaces commerciales selon la revendication 1, comportant en outre une trappe (12) au moyen de laquelle est réalisée de manière antagonique l'ouverture et la fermeture des deux parties (7) et (8) par rapport au conduit (3), cette trappe (12) se trouvant à la fin du double conduit (7-8) et étant reliée aux trappes (10) par une biellette (13) qui assure la simultanéité de son changement de position avec celui des trappes (10).

3. Installation pour la distribution automatique de petits paquets dans les grandes surfaces commerciales selon la revendication 1 ou 2, l'envoi des paquets (2) depuis le magasin général (1) se faisant par l'introduction des paquets (2) sélectionnés dans le premier conduit (7), tandis que le deuxième conduit (8) parallèle conduit la poussée pneumatique engendrée par le dispositif pneumatique (6) qui entre en action au début du processus afin d'assurer l'impulsion pneumatique nécessaire à l'envoi des paquets (2) depuis le premier conduit (7), par déviation de la poussée pneumatique du deuxième conduit (8) dans ce premier conduit (7) grâce au changement de position des trappes (10) situées entre ces conduits.

4. Installation pour la distribution automatique de petits paquets dans les grandes surfaces commerciales selon l'une des revendications 1 à 3, des lecteurs optiques étant disposés à des points stratégiques, comme au début du conduit (3) et dans les dérivations (14) vers les sorties (4), ces lecteurs optiques effectuant le contrôle du passage des paquets (2) en détectant toute anomalie qui pourrait se produire, et étant disposés de préférence dans des zones courbes, où la séparation obligée des bords des paquets (2) consécutifs permet de détecter avec exactitude chacun d'entre eux.

5. Installation pour la distribution automatique de petits paquets dans les grandes surfaces commerciales selon l'une des revendications 1 à 4, des détecteurs optiques (17.1 et 17.2), se trouvant en relation avec . l'entrée du conduit (7), devant et derrière l'emplacement des trappes (10), ces détecteurs contrôlant le passage des paquets (2) vers l'intérieur du conduit mentionné (7) pour annuler le changement de position des trappes (10) lorsqu'un paquet (2) se trouve en cours d'entrée.

6. Installation pour la distribution automatique de petits paquets dans les grandes surfaces commerciales selon l'une des revendications 1 à 5, l'introduction des paquets (2) dans le conduit (7) étant effectuée par une chaîne transporteuse (9) qui, en plus du transfert des paquets (2) à leur position d'envoi suite aux sélections effectuées, assure également automatiquement, selon une fréquence déterminée, une course de "balayage" pour retirer tout paquet (2) qui pourrait se trouver par erreur dans le conduit (7).

7. Installation pour la distribution automatique de petits paquets dans les grandes surfaces commerciales selon l'un des revendications 1 à 6, un espace étant réservé dans le magasin général (1) pour accueillir des paquets (2) vides aux dimensions correspondant à l'intérieur du conduit (3), cet espace étant conçu pour délivrer automatiquement ces paquets (2) vides afin de nettoyer le conduit lorsque nécessaire.

8. Installation pour la distribution automatique de petits paquets dans les grandes surfaces commerciales selon l'une des revendications 1 à 7, une trappe (15) se trouvant à la sortie de chacune des dérivations (14) et étant actionnée par un moteur correspondant (16) susceptible de se positionner pour fermer le conduit (3) en cas de demande de distribution depuis la sortie (4) correspondante.

9. Installation pour la distribution automatique de petits paquets dans les grandes surfaces commerciales selon l'une des revendications 1 à 8, le conduit (3) étant prévu pour déboucher à son extrémité dans un conteneur (18) nommé "caisse noire" destiné à recueillir les paquets (2) envoyés par erreur et les restes qu'il convient d'éliminer de l'intérieur du conduit (3).

10. Installation pour la distribution automatique de petits paquets dans les grandes surfaces commerciales selon l'une des revendications 1 à 9, un magasin autonome(19) pouvant être incorporé en relation avec chaque sortie (4) pour pouvoir délivrer des nombres déterminés de paquets sélectionnés (2), chacun de ces magasins (19) comprenant un carrousel (20) muni d'une série de compartiments (21) pour accueillir les paquets (2) et un compartiment (21.1) vide, tous ces compartiments se trouvant en relation avec un conduit à chute libre (22), chaque carrousel (20) présentant une grande couronne (56) accouplée à un pignon (55) mû par un moteur (54) situé latéralement, chaque carrousel (20) ayant deux micro-interrupteurs (28 et 59), le premier en correspondance avec un ergot unique (58) et le second avec une série d'ergots (57) situés autour de la couronne (56).

11. Installation pour la distribution automatique de petits paquets dans les grandes surfaces commerciales selon la revendication 10, les magasins autonomes (19) comprenant, en relation avec leurs compartiments de chargement (21), un balancier (23) actionné par un solénoïde (27), ce balancier retenant les paquets (2) stockés en permettant la libération un par un de chacun d'entre eux en fonction des demandes de distribution.

12. Installation pour la distribution automatique de petits paquets dans les grandes surfaces commerciales selon la revendication 10 ou 11, les magasins autonomes (19) comprenant, en relation avec l'embouchure supérieure du conduit de chute libre (22), un détecteur du passage des paquets (2) provenant du magasin général (1), ce détecteur assurant le déclenchement du moteur (54) pour créer un mouvement rotatif de va-et-vient du carrousel (20) destiné à supprimer le blocage lorsqu'un pagquet (2) reste retenu dans ladite embouchure.

13. Installation pour la distribution automatique de petits paquets dans les grandes surfaces commerciales selon l'une des revendications 10 à 12, des boîtes accessoires en plastique ou en carton étant prévues pour une utilisation avec des produits placés dans des sachets ou emballages similaires et pour le logement de paquets (2) desdits produits, en vue de leur chargement dans le magasin général (1) ainsi que dans les magasins autonomes (19), pour l'envoi par impulsion pneumatique des produits correspondants.

## Claims

1. An installation for automatically delivering small packets in large commercial areas, the installation being of the type formed by a general store (1) having departing therefrom a duct (3) with branches (14) leading to respective outlets (4) that open out at specific access points for users, the installation being **characterized in that**, in the outlet zone coming from the general store (1), the duct (3) comprises two parallel ducts (7-8) in which the two portions incorporate hatches (10) whose positions can be modified to separate the ducts corresponding to the two portions (7, 8) or to place the duct (8) of the second portion in a position where it is diverted towards the duct (7) of the first portion, one of the portions (7) remaining ready to receive packets (2) for delivering from the store (1), while the other portion (8) remains directly in communication with a pneumatic system (6) creating a pneumatic pulse for sending packets (2) via the duct (3).

2. An installation for automatically delivering small packets in large commercial areas according to claim 1, a hatch (12) whereby the two portions (7 and 8) are opened and closed in opposition relative to the duct (3) being situated at the end of the dual duct (7-8), and being connected to the hatches (10) by a link (13) which ensures that its change in position takes place simultaneously with that of the hatches (10).

3. An installation for automatically delivering small packets in large commercial areas according to claim 1 or claim 2, packets (2) being sent from the general store (1) by introducing selected packets (2) into the first duct (7) while the parallel second duct (8) conveys the pneumatic thrust generated by the pneumatic device (6) which comes into action at the beginning of the process in order to provide the pneumatic impulse necessary for sending packets (2) from the first duct (7) by diverting the pneumatic thrust from the second duct (8) into said first duct (7) by changing the position of the hatches (10) situated between the ducts.

4. An installation for automatically delivering small packets in large commercial areas according to any one of claims 1 to 3, optical readers being disposed at strategic points, such as the beginning of the duct (3) and in the branches (14) leading to the outlets (4), said optical readers monitoring the passage of packets (2), detecting any anomaly that might arise, and being preferably disposed in curved zones where the edges of consecutive packets (2) are constrained to be separated, thus enabling each packet to be detected exactly.

5. An installation for automatically delivering small packets in large commercial areas according to any one of claims 1 to 4, optical detectors (17.1 and 17.2) being placed in relationship with the inlet to the duct (7) in front of and behind the location of the hatches (10), said detectors monitoring the passage of packets (2) towards the inside of said duct (7) in order to cancel the change in position of the hatches (10) when a packet (2) is in the process of entering.

6. An installation for automatically delivering small packets in large commercial areas according to any one of claims 1 to 5, packets (2) being introduced into the duct (7) by a conveyor (9) which, in addition to transferring packets (2) to their sending position as a function of selections performed, also acts automatically at a determined frequency to perform a "sweeping" stroke in order to withdraw any packet (2) which might be found in error in the duct (7).

7. An installation for automatically delivering small packets in large commercial areas according to any one of claims 1 to 6, a space being provided in the general store (1) for receiving empty packets (2) having dimensions that match the inside of the duct (3), said space being designed for automatically delivering said empty packets (2) in order to clean the duct whenever necessary.

8. An installation for automatically delivering small packets in large commercial areas according to any one of claims 1 to 7, a hatch (15) being situated at the outlet from each of the branches (14), and being actuated by a corresponding motor (16) suitable for taking up a position to close the duct (3) in the event of a request for delivery from the corresponding outlet (4).

9. An installation for automatically delivering small packets in large commercial areas according to any one of claims 1 to 8, the duct (3) being designed to open out at its end into a "black box" container (18) for recovering packets (2) sent in error and for recovering the leftovers that need to be eliminated from inside the duct (3).

10. An installation for automatically delivering small packets in large commercial areas according to any one of claims 1 to 9, an independent store (19) being capable of being incorporated in association with each outlet (4) in order to be capable of delivering determined numbers of selected packets (2), each of these stores (19) comprising a carousel (20) having a series of compartments (21) for receiving the packets (2) and an empty compartment (21.1), all of these compartments being associated with a free fall duct (22), each carousel (20) presenting a large ring (56) coupled to a gearwheel (55) driven by a laterally-situated motor (54), and each carousel (20) having two microswitches (28 and 59), the first microswitch co-operating with a single spur (58) and the second microswitch co-operating with a series of spurs (57) situated around the ring (56).

11. An installation for automatically delivering small packets in large commercial areas according to claim 10, each independent store (19) having, in association with their loading compartments (21), a rocker (23) actuated by a solenoid (27), said rocker retaining the stored packets (2) and allowing each of them to be released one by one as a function of delivery requests.

12. An installation for automatically delivering small packets in large commercial areas according to claim 10 or claim 11, each independent store (19) having, in association with the top opening of the free fall duct (22), a detector for detecting the passage of packets (2) coming from a general store (1), said detector serving to trigger the motor (54) to create rotary back-and-forth movement of the carousel (20) for releasing a jam in the event of a packet (2) remaining in said opening.

13. An installation for automatically delivering small packets in large commercial areas according to any one of claims 10 to 12, accessory boxes made of plastics or card being provided for use with goods placed in bags or similar packaging, and for housing packets (2) of said goods in order to enable them to be loaded in the general store (1) and in the independent stores (19) for sending the corresponding goods by pneumatic pulse.

## Patentansprüche

1. Einrichtung zum automatischen Verteilen kleiner Packungen in großen Warenhäusern, gebildet von einem Zentrallager (1), von dem eine Rohrleitung (3) wegführt, die Abzweigungen (14) in Richtung entsprechender Ausgänge (4), die zu für den Benutzer konkreten Zugangspunkten führen, aufweist,
**dadurch gekennzeichnet,**
**dass** in der aus dem Zentrallager (1) wegführenden Ausgangszone, die Rohrleitung (3) eine parallele Doppelrohrleitung (7-8) beinhaltet, in deren zwei Teile Klappen (10) eingebaut sind, deren Position modifiziert werden kann, um die den zwei Teilen (7) und (8) entsprechenden Rohrleitungen zu trennen, oder um die Rohrleitung (8) des zweiten Teils in Richtung der Rohrleitung (7) des ersten Teils in eine Umleitungsposition zu bringen, wobei einer der Teile (7) bereit bleibt, die zu verteilenden Packungen (2) aus dem Lager (1) aufzunehmen, während der andere Teil (8) unmittelbar mit einem pneumatischen System (6), das zur Versendung der Packungen (2) durch die Rohrleitung (3) einen pneumatischen Antrieb erzeugt, in Verbindung bleibt.

2. Einrichtung zum automatischen Verteilen kleiner Packungen in großen Warenhäusern nach Anspruch 1, bei welcher mittels einer Klappe (12) auf entgegenwirkende Weise die Öffnung und die Schließung der zwei Teile (7) und (8) in Bezug auf die Rohrleitung (3) realisiert ist, wobei diese Klappe (12) sich am Ende der Doppelrohrleitung (7-8) befindet und mit den Klappen (10) durch einen Hebelarm (13) verbunden ist, der die Simultanität ihrer Positionsveränderung mit der der Klappen (10) sicherstellt.

3. Einrichtung zum automatischen Verteilen kleiner Packungen in großen Warenhäusern nach Anspruch 1 oder 2, bei welcher die Versendung der Packungen (2) von dem Zentrallager (1) aus sich durch die Einführung der ausgewählten Packungen (2) in die erste Rohrleitung (7) vollzieht, während die parallele zweite Rohrleitung (8) den durch die pneumatische Apparatur (6) erzeugten pneumatischen Schub führt, der am Anfang des Prozesses einsetzt, um den pneumatischen Antrieb sicherzustellen, der notwendig ist zur Versendung von Packungen (2) von der ersten Rohrleitung (7) aus, durch Ablenkung des pneumatischen Schubs der zweiten Rohrleitung (8) in diese erste Rohrleitung (7) dank einer Positionsveränderung der sich zwischen diesen Rohrleitungen befindenden Klappen (10).

4. Einrichtung zum automatischen Verteilen kleiner Packungen in großen Warenhäusern nach einem der Ansprüche 1 bis 3, bei welcher sich an strategischen Punkten, wie am Anfang der Rohrleitung (3) und in den Abzweigungen (14) in Richtung der Ausgänge (4), optische Ablesevorrichtungen befinden, wobei diese optischen Ablesevorrichtungen die Durchgangskontrolle der Packungen (2) übernehmen, indem sie jede Unregelmäßigkeit, die entstehen könnte, aufspüren, und sich vorzugsweise in gekrümmten Bereichen befinden, wo es die zwangsläufige Trennung der Ränder aufeinanderfolgender Packungen (2) erlaubt, mit Zuverlässigkeit jede von ihnen zu ermitteln.

5. Einrichtung zum automatischen Verteilen kleiner Packungen in großen Warenhäusern nach einem der Ansprüche 1 bis 4, bei welcher sich optische Detektoren (17.1 und 17.2) in Bezug zum Zugang der Rohrleitung (7) vor und hinter der Lage der Klappen (10) befinden, wobei diese Detektoren den Durchgang der Packungen (2) im Inneren der erwähnten Rohrleitung (7) überwachen, um die Positionsveränderung der Klappen (10) zu annullieren, wenn sich eine Packung (2) im Zugangsbereich befindet.

6. Einrichtung zum automatischen Verteilen kleiner Packungen in großen Warenhäusern nach einem der Ansprüche 1 bis 5, bei welcher die Einführung der Packungen (2) in die Rohrleitung (7) durch ein Transportband (9) bewirkt ist, das über den auf eine stattgefundene Auswahl erfolgten Transfer der Packungen (2) zu ihrer Versandposition hinaus ebenfalls automatisch in einer bestimmten Frequenz einen Durchlauf des "Auskehrens" sicherstellt, um jede Packung (2), die sich irrtümlich in der Rohrleitung (7) befinden könnte, zu entfernen.

7. Einrichtung zum automatischen Verteilen kleiner Packungen in großen Warenhäusern nach einem der Ansprüche 1 bis 6, bei welcher in dem Zentrallager (1) ein Raum für die Aufnahme von leeren, dimensionsmäßig dem Inneren der Rohrleitung (3) entsprechenden Packungen (2) reserviert ist, wobei dieser Raum dazu dient, automatisch diese leeren Packungen (2) herauszugeben, um die Rohrleitung, wenn nötig, zu reinigen.

8. Einrichtung zum automatischen Verteilen kleiner Packungen in großen Warenhäusern nach einem der Ansprüche 1 bis 7, bei welcher sich am Ausgang von jeder Abzweigung (14) eine durch einen entsprechenden Motor angetriebene Klappe (15) befindet, die imstande ist, sich in Stellung zu bringen, um die Rohrleitung (3) im Falle einer von dem entsprechenden Ausgang (4) ausgehenden Verteilungsnachfrage zu schließen.

9. Einrichtung zum automatischen Verteilen kleiner Packungen in großen Warenhäusern nach einem der Ansprüche 1 bis 8, bei welcher die Rohrleitung (3) dazu vorgesehen ist, an ihrem äußersten Ende in einen "schwarze Kasse" genannten Behälter (18) zu münden, der dazu bestimmt ist, die irrtümlich versandten Packungen (2) und die Rückstände, die es sich aus dem Inneren der Rohrleitung (3) zu entfernen empfiehlt, aufzunehmen.

10. Einrichtung zum automatischen Verteilen kleiner Packungen in großen Warenhäusern nach einem der Ansprüche 1 bis 9, bei welcher in Verbindung mit jedem Ausgang (4) ein autonomes Lager (19) eingebaut werden kann, um bestimmte Mengen ausgewählter Packungen (2) freizugeben, wobei jedes dieser Lager (19) ein Karussell (20) beinhaltet, das mit einer Reihe von Fächern (21) zur Aufnahme der Packungen (2) sowie einem leeren Fach (21.1) versehen ist, wobei sich alle diese Fächer in Beziehung mit einer freien Fallrohrleitung (22) befinden, wobei jedes Karussell (20) einen großen Kranz (56) aufweist, der mit einem durch einen seitlich angeordneten Motor (54) bewegten Getrieberad (55) verbunden ist, wobei jedes Karussell (20) zwei Mikrounterbrecher (28 und 59) beinhaltet, der erste in Verbindung mit einem einzigen Vorsprung (58) und der zweite mit einer Reihe von Vorsprüngen (57), die um den Kranz (56) herum angeordnet sind.

11. Einrichtung zum automatischen Verteilen kleiner Packungen in großen Warenhäusern nach Anspruch 10, bei welcher die autonomen Lager (19) in Verbindung mit ihren Beladungsfächern (21) einen von einem Elektromagnet (27) angetriebenen Schwenkbalken (23) beinhalten, wobei dieser Schwenkbalken die gelagerten Packungen (2) zurückhält und die Abgabe einer jeden von ihnen Stück für Stück in Abhängigkeit von Verteilungsnachfragen zulässt.

12. Einrichtung zum automatischen Verteilen kleiner Packungen in großen Warenhäusern nach Anspruch 10 oder 11, bei welcher die autonomen Lager (19) in Verbindung mit der oberen Mündung der freien Fallrohrleitung (22) einen Detektor für den Durchgang der aus dem Zentrallager (1) kommenden Packungen (2) beinhalten, wobei dieser Detektor die Auslösung des Motors (54) sicherstellt, der eine rotierende Hin-und-her-Bewegung des Karussells (20) erzeugt, um die Blockade aufzuheben, wenn eine Packung (2) in besagter Mündung stecken bleibt.

13. Einrichtung zum automatischen Verteilen kleiner Packungen in großen Warenhäusern nach einem der Ansprüche 10 bis 12, bei welcher Zubehörschachteln aus Plastik oder Pappe vorgesehen sind, für eine Verwendung mit in Tütchen oder ähnlichen Verpackungen eingepackten Produkten und für die Beherbergung der Packungen (2) besagter Produkte in Hinsicht auf ihre Lagerung im Zentrallager (1) wie auch in den autonomen Lagern (19), für die Versendung entsprechender Produkte mittels eines pneumatischen Antriebs.
